Europäisches Patentamt

European Patent Office

Office européen des brevets

(19)

(11) Publication number: **0 365 092**

**A1**

(12) **EUROPEAN PATENT APPLICATION**

(21) Application number: **89202600.6**

(51) Int. Cl.5: **G11B 5/17 , G11B 5/53**

(22) Date of filing: **16.10.89**

(30) Priority: **21.10.88 NL 8802590**

(43) Date of publication of application:
**25.04.90 Bulletin 90/17**

(84) Designated Contracting States:
**AT DE FR GB IT**

(71) Applicant: **N.V. Philips' Gloeilampenfabrieken**
**Groenewoudseweg 1**
**NL-5621 BA Eindhoven(NL)**

(72) Inventor: **Verhoeven, Martinus Cornelis**
**Johannus Maria**
**c/o INT. OCTROOIBUREAU B.V. Prof.**
**Holstlaan 6**
**NL-5656 AA Eindhoven(NL)**
Inventor: **van den Reek, Johannes Nicolaas**
**Johanna Maria**
**c/o INT. OCTROOIBUREAU B.V. Prof.**
**Holstlaan 6**
**NL-5656 AA Eindhoven(NL)**
Inventor: **Caers, Johan Frans Justin Maria**
**c/o INT. OCTROOIBUREAU B.V. Prof.**
**Holstlaan 6**
**NL-5656 AA Eindhoven(NL)**
Inventor: **Daenen, Theo Ernest Gerard**
**c/o INT. OCTROOIBUREAU B.V. Prof.**
**Holstlaan 6**
**NL-5656 AA Eindhoven(NL)**

(74) Representative: **Van Weele, Paul Johannes**
**Frits et al**
**INTERNATIONAAL OCTROOIBUREAU B.V.**
**Prof. Holstlaan 6**
**NL-5656 AA Eindhoven(NL)**

(54) **Magnetic head, system comprising at least two of these magnetic heads as well as a scanning unit provided with the system.**

(57) Magnetic head (40) a coil (4a, 4b) of which is constituted by a first sub-pattern (6) which is provided on a substrate (9) and on which electrically conducting connection members (8) are formed and which substrate is located at one side of the magnetic head, and a film (11) on which a second sub-pattern (5) is present which is connected to the connection members (8) and is located at the opposite side of the magnetic head. The film (11) carries a further pattern which constitutes, for example, the turns of a rotary portion (42) of a transformer so that the film (11) with a plurality of magnetic heads provided thereon is suitable for use in a rotary scanning unit (43).

F IG.2

FIG.1

## Magnetic head, system comprising at least two of these magnetic heads as well as a scanning unit provided with the system.

The invention relates to a magnetic head comprising at least one electrically conducting coil, at least one core limb, which is partly enveloped by the coil, at least one winding aperture and at least one transducing gap, the coil having an electrically conducting conductor pattern provided with at least a sub-pattern as well as an electrically conducting connection member connected to the sub-pattern.

Such a magnetic head is disclosed in DE 30 36 218 A1. The prior art magnetic head does not include a conventional coil consisting of an electrically conducting coil wound around the core limb, but includes a coil formed by flat conductor patterns which constitute the turns of the coil together with the connection limbs. Such a design of the coil renders winding of the thread round the core limbs superfluous and promotes automation of applying a coil around the core limb. In the magnetic heads known so far the connecting wires or connecting conductors of the coils are connected to a signal processing arrangement during mounting in an apparatus. In apparatuses having a rotating scanning unit, such as a videorecorder, the connecting conductors of the magnetic head of a plurality of magnetic heads are connected to a rotary portion of a transformer through which the signals are passed from and to the stationary portion of the apparatus.

It is alternatively conceivable that the connecting conductors of the magnetic head are first connected to an amplifier included in the rotary portion of the scanning unit whereafter the signals are passed from and to the stationary portion of the apparatus via a transformer. At present both the electrically conducting conductor pattern for an amplifier circuit and also the windings of a transformer can be disposed on a printed circuit board. In both cases the connection conductors of the magnetic heads are connected to conductors located on a p.c. board. This has the disadvantage that a separate manufacturing step for connection of the conductors is necessary. Windings of a transformer present on a p.c. board are described in Netherlands Patent Application 8,702,531 (see PHN 12.302 herewith incorporated by reference).

The invention has for its object to integrate a magnetic head of the type disclosed in the opening paragraph with a printed circuit so that the manufacturing step for connecting the connection conductor of the magnetic head to the printed circuit can be omitted. To that end the invention is characterized in that the sub-pattern is applied onto a film material which in addition has a further electrically conducting pattern.

An advantageous embodiment of the magnetic head according to the invention is characterized in that the film is a flexible plastic film. As a result thereof the two pattern provided on the film can be positioned relative to each other without any limitation since the connecting film section is flexible.

A further advantageous embodiment of the magnetic head according to the invention, is characterized in that the further electrically conducting pattern has turns, which form part of a rotary portion of a transformer. This embodiment can be used with advantage when an integrated foil is used in a rotary scanning unit wherein the signals from and to the rotary magnetic heads can be conveyed to the stationary portion of the scanning unit via the rotor.

A further advantageous embodiment of the magnetic head according to the invention wherein the sub-pattern is present at one side of the core limb and the electrically conducting conductor pattern includes a further sub-pattern, present at a different at least substantially parallel side of the core limb and the connection members extend between the conductor pattern, is characterized in that the connection members are embedded in an electrically insulating layer having a thickness which corresponds to the length of the connection members. Advantageously, the insulating layer is of the same thickness as the connection member; not thinner in view of an adequate installation and not thicker in view of the possibility of connecting the connection members to the second conductor pattern.

A further advantageous embodiment of the magnetic head according to the invention, is characterized in that each connection member forms one integral whole with one of the sub-patterns and is connected to the further sub-pattern via a connection. The fact that the connections between the two conductor patterns are each formed by one connection member instead of two connection members is advantageous on connecting the connection member to the conductor pattern other than the pattern on which the connection member has been formed.

A further advantageous embodiment of the magnetic head according to the invention, is characterized in that all the connection members form an integral whole with one of the sub-patterns and all are connected to the further sub-pattern via connections. This is advantageous for the manufacture since as a consequence thereof connection members need only to be formed on one of the two conductor patterns.

A still further embodiment of the magnetic head according to the invention, is characterized in that connecting conductors which connect the sub-pattern to the further pattern are present on the film. Thus it is not necessary for the individual connection wires or conductors to be connected to the coil.

A further embodiment of the magnetic head according to the invention in which the magnetic head includes a further core limb, connected to the previous core limb, a transducing gap being present between the core limbs, is characterized in that the magnetic head includes a further coil which is electrically connected to the previous coil. An advantage is that more turns can be formed so that a higher magnetic flux can be realized. A further advantage is that the magnetic head may be of a small size, because the required number of turns can be divided over two coils as a result of which the coils can be of smaller dimensions.

A still further embodiment of the magnetic head according to the invention, is characterized in that it is of a multiple structure and provided with at least one further transducing gap. This has the advantage that a plurality of tracks can be written and read simultaneously.

The invention also relates to a system comprising at least two magnetic heads, the system being characterized in that the magnetic heads each are designed as a magnetic head in accordance with one of the embodiments described in the foregoing, wherein the sub-patterns of the magnetic heads and the further electrically conducting pattern are provided on the film. Since a rotary scanning unit usually comprises more than one magnetic head it is advantageous to apply several magnetic heads on the film during mounting so that it is not necessary to provide each magnetic head separately on the rotary portion of the scanning unit.

In addition, the invention relates to a scanning unit comprising a rotary and a stationary portion, the scanning unit having at least two magnetic heads which are fastened to the rotary portion, the scanning unit being characterized in that the scanning unit includes a system of the type described hereinbefore. As has already been stated it is advantageous if, for example, the rotor windings of a transformer of the rotary scanning unit can be integrated with the magnetic heads.

The invention will now be described by way of example in greater detail with reference to embodiments shown in the accompanying drawings. Herein:

Figure 1 shows a film material of a first embodiment of a magnetic head according to the invention,

Figure 2 is an enlarged view of the portion of the film shown in a circle in Figure 1 and provided with the first embodiment of a magnetic head according to the invention,

Figure 3 shows the film material of Figure 1 fastened to the rotary portion of a transformer of a scanning unit,

Figure 4 is a side elevational view of the scanning unit shown in Figure 3,

Figure 5 shows a different film of a magnetic head according to the invention including magnetic heads and fastened to the rotary portion of the scanning unit transformer,

Figure 6 is a side elevational view of the scanning unit shown in Figure 5,

Figure 7 is a detailed representation of the magnetic head shown in Figure 2,

Figure 8 shows a substrate with the connection members formed thereon,

Figure 9 shows core limbs positioned on the substrate and

Figure 10 shows a second embodiment of a magnetic head according to the invention, the magnetic head being of a dual structure.

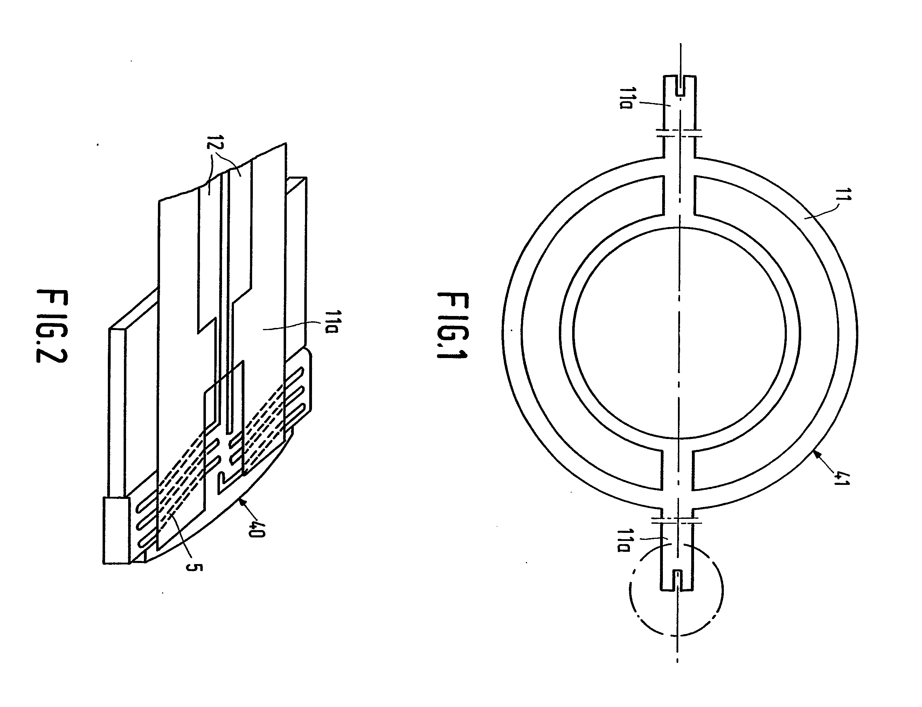

Figure 1 shows a printed circuit board 41 provided with a film material 11 carrying an electrically conducting annular pattern which forms turns for a rotary portion of a transformer. The film 11 is preferably made of a flexible synthetic resin film but a metal foil provided with an electrically insulating layer is also satisfactory. Said pattern is not shown in the Figures as many embodiments thereof are possible and they are not within the scope of the invention. It is, for example, possible to provide the inner ring and the outer ring of the p.c. board 41 each with an annular conductor, each conductor connected to a magnetic head. It is also possible to apply a plurality of annular conductors on a ring of the p.c. board 41 and the p.c. board 41 may alternatively have one or more than two rings. It is even possible to provide conductors on both sides of the film 11 so as to obtain still more turns per transformer channel or to have connecting conductors of the turns with the heads extend at the other side of the film 11.

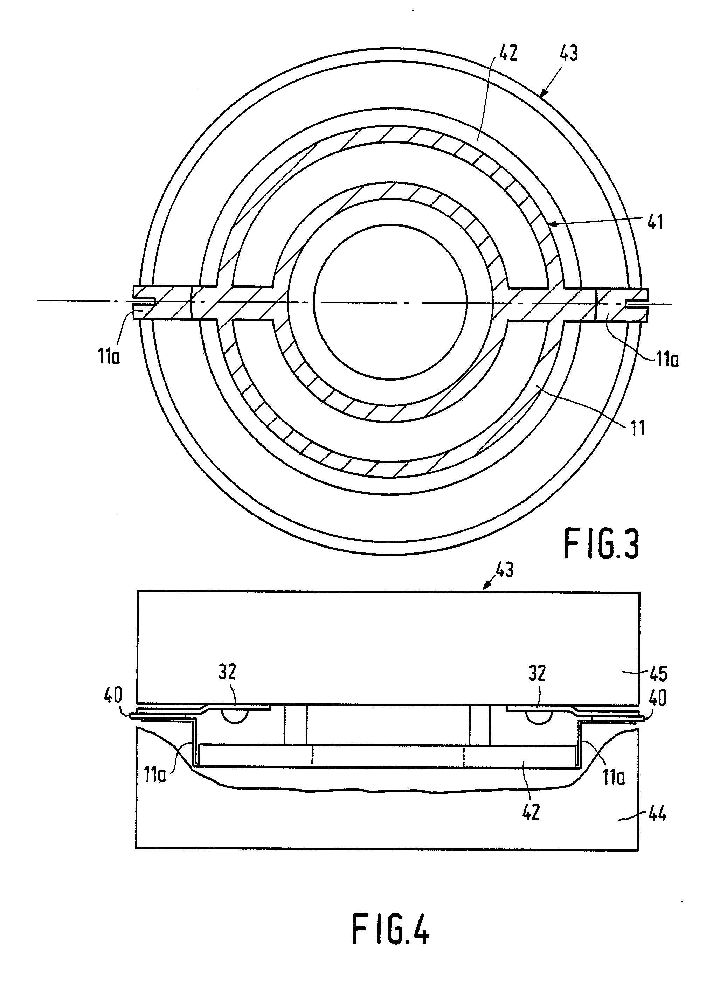

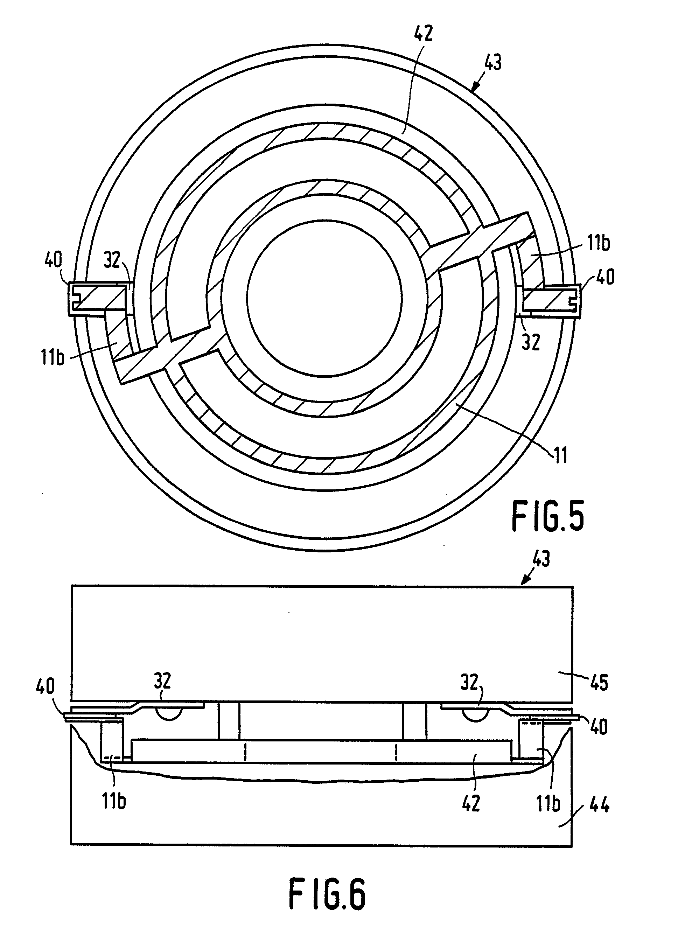

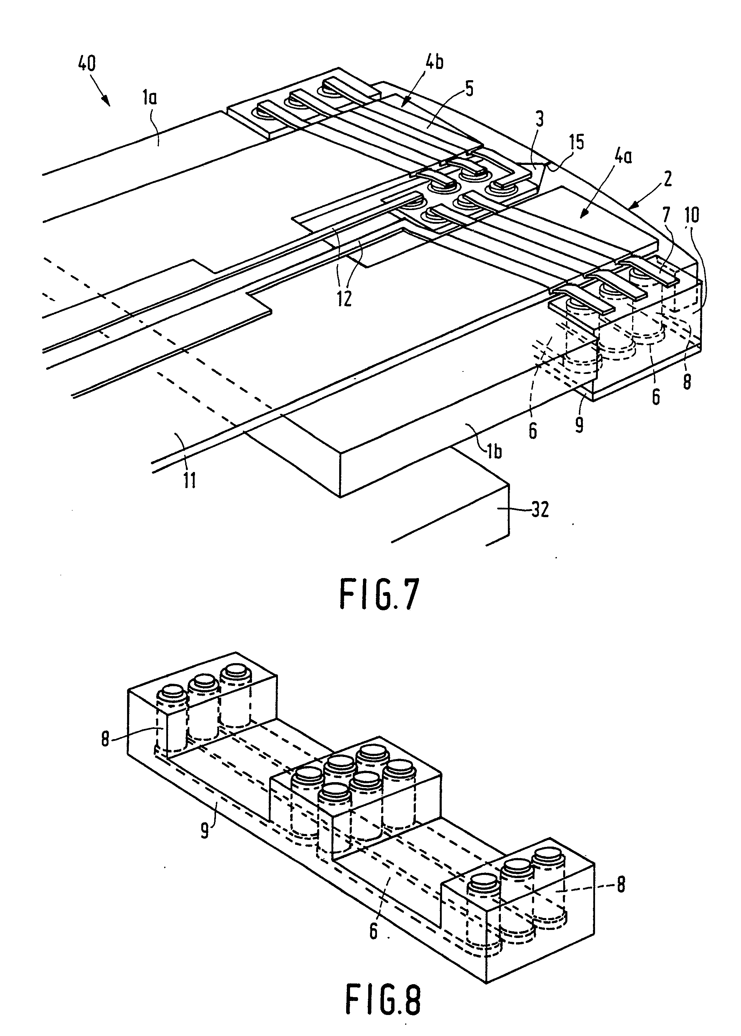

Figure 2 shows in what manner the connection conductors 12 and a conductor pattern 5 of the coil of a magnetic head 40 are applied on the film 11. In Figures 3 and 4 it is shown in what manner the p.c. board 41 having a system of two magnetic heads 40 is applied on the rotary portion 45 of a scanning unit 43. The rotary portion 42 of the transformer which portion cooperates with a stationary portion, not shown, of the transformer, present in a stationary portion 44 of the scanning unit 43 is located at the bottom side of the rotary portion of the scanning unit 43. The film 11 is attached to the bottom side of the rotary portion 42. The projecting flaps 11a of the film 11 onto which the connection conductors 12 are applied, are curved towards the magnetic heads and the extreme ends are fastened to the heads 40. The heads 40 are applied on magnetic head holders 32 which are, for example, bolted to the rotary portion. In the embodiment of the film 11 the heads 40 can be adjusted without any problems in the radial direction relative to the scanning unit 43 because of the manner in which the projecting flaps 11a of the film 11 are formed and curved. This is possible because the fold lines of the film extend in a tangential direction. When the tangential displacement of the heads is of greater importance than the radial displacement, the flaps 11b of the film 11 are preferably of a structure as shown in the Figures 5 and 6. Then the fold lines extend in the radial direction as a result of which the tangential displacement gives few problems. Instead of a system having two magnetic heads it is of course obvious that one or a plurality of magnetic heads may alternatively be used.

The embodiment, shown in Figure 2 and 7, of a magnetic head 40 according to the invention includes two core limbs 1a, 1b each partly enveloped by a coil 4a, 4b and having recesses forming a winding aperture 3. A first sub-pattern 6, applied on a substrate 9, see Figure 8, is present at one side of the core limbs. The extreme ends of the conductors are provided with connection members 8 of a cylindrical shape.

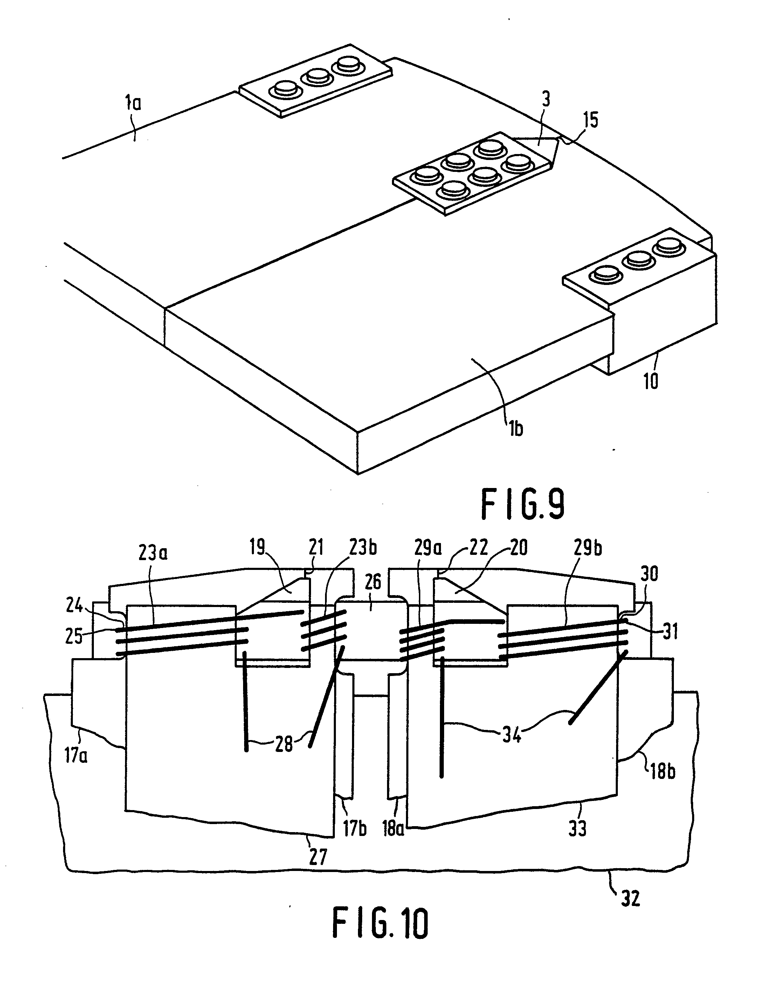

These connection members 8 are embedded in an insulating layer 10 which forms an integral whole with the substrate 9, layer 10 also covers the first sub-pattern 6 and thus forms an insulating film between this sub-pattern and the core limbs 1a, 1b, see Figure 9. At the other side of the core limbs 1a, 1b there is a film 11 on which connection conductors 12 and a second sub-pattern 5 are present. The connection patterns 12 connect the second sub-pattern 5 to the further pattern. The film 11 constitutes an insulating film between the core limbs 1a, 1b and the second sub-pattern 5. The conductor ends 7 of the second sub-pattern 5 are connected to the upper sides of the connection members. In the tape contact face 2 of the magnetic head a transducing gap 15 is formed between the two core limbs. The two core limbs are fastened to a head holder 32.

Figure 10 shows a magnetic head of a dual structure which can be used with advantage in those situations where two information tracks must be written side-by-side. The magnetic head shown includes four core limbs 17a, 17b, 18a, 18b, which are of such different dimensions that the transducing gaps 21, 22 can be positioned close to each other. The core limbs are partly enveloped by coils, comprising, not shown in the Figure, first sub-patterns present on two substrates and second sub-patterns 23a, 23b, 29a, 29b present on two flaps 27, 33 of the film. Each flap is also provided with a pair of connection conductors 28 and 34, respectively. Conducter ends 24 and 30, respectively, of the conductors of the second sub-patterns 23a, 23b and 29a, 29b, respectively, are connected to respective connection members 25 and 31 which are enveloped by an insulating layer 26. The core limbs are provided with recesses which form winding apertures 19, 20. Also in this case the core limbs are fastened to a magnetic head holder 32.

It will be obvious that the invention is not limited to the embodiments shown here but that also further embodiments are within the scope of the invention.

## Claims

1. A magnetic head (40) comprising at least one electrically conducting coil (4a, 4b), at least one core limb (1a, 1b), which is partly enveloped by the coil, at least one winding aperture (3) and at least one transducing gap (15), the coil having an electrically conducting conductor pattern (15) provided with at least a sub-pattern (5) as well as electrically conducting connection members (8) connected to the sub-pattern, characterized in that the sub-pattern (5) is applied onto a film material (11) which in addition has a further electrically conducting pattern.

2. A magnetic head as claimed in Claim 1, characterized in that the film (11) is a flexible synthetic resin film.

3. A magnetic head as claimed in Claim 1 or 2, characterized in that the further electrically conducting pattern has turns which form part of a rotary portion (42) of a transformer.

4. A magnetic head as claimed in Claim 1, 2 or 3, in which the sub-pattern (5) is present at one side of the core limb (1a, 1b) and the electrically conducting conductor pattern includes a further sub-pattern (6) provided at a different at least substantially parallel side of the core limb (1a, 1b) and the connection members (8) extend between the conductor patterns (5, 6), characterized in that the connection members (8) are embedded in an electrically insulating layer (10) having a thickness which corresponds to the length of the connection members.

5. A magnetic head as claimed in Claim 4, characterized in that each connection member (8) forms an integral whole with one of the sub-patterns (5, 6) and are connected to the other sub-pattern via a connection.

6. A magnetic head as claimed in Claim 5, characterized in that all the connection members (8) form an integral whole with one of the sub-patterns (6) and all connection members are connected to the further sub-pattern (5) via connections.

7. A magnetic head as claimed in any one of the preceding Claims, characterized in that connection conductors (12), which connect the sub-pattern (5) to the further pattern are provided on the film (11).

8. A magnetic head as claimed in any one of the preceding Claims, in which the magnetic head includes a further core limb (1b) which is connected to the previous core limb (1a), a transducing gap (15) being present between these core limbs, characterized in that the magnetic head includes a further coil (4b) which is electrically connected to the previous coil (4a).

9. A magnetic head as claimed in any one of the preceding Claims, characterized in that this head is of a multiple structure and is provided with at least a further transducing gap (21, 22).

10. A system comprising at least two magnetic heads, characterized in that each magnetic head is designed as a magnetic head (40) as claimed in any one of the preceding Claims, the sub-patterns (5) of the magnetic heads and the further electrically conducting pattern being applied on the film material (11).

11. A scanning unit (43) having a rotary (45) and a stationary portion (44), the scanning unit including at least two magnetic heads (40) which are fastened to the rotary portion, characterized in that the scanning unit includes a system as claimed in Claim 10.

FIG.1

FIG.2

FIG.3

FIG.4

FIG.5

FIG.6

FIG.7

FIG.8

FIG.9

FIG.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3731005 (SHEARMAN) <br> * column 3, line 42 - column 5, line 37 * <br> * column 6, line 60 - column 7, line 3; figures 1, 2, 3, 7 * | <br><br>1 | G11B5/17 <br> G11B5/53 |
| A | | 4-9 | |
| Y | PATENT ABSTRACTS OF JAPAN <br> vol. 10, no. 243 (P-489)(2299) 21 August 1986, <br> & JP-A-61 074116 (NEC KANSAI LTD) 16 April 1986, <br> * the whole document * | 1 | |
| A | | 7, 8, 10, 11 | |
| A | PATENT ABSTRACTS OF JAPAN <br> vol. 10, no. 260 (P-494)(2316) 05 September 1986, <br> & JP-A-61 085616 (FUJI PHOTO FILM CO LTD) 01 May 1986, <br> * the whole document * | 1, 2, 10, 11 | |
| A | GB-A-2037476 (ROBERT BOSCH GMBH) <br> * abstract * <br> * page 4, lines 15 - 26; figures 3A, 3B, 4 * | <br><br>1, 3, 10, 11 | TECHNICAL FIELDS SEARCHED (Int. Cl.5) <br><br> G11B |
| A | DE-B-1190510 (MAX GRUNDIG) <br> * column 2, lines 40 - 51 * <br> * column 3, lines 24 - 29; figures 1, 2 * | <br><br>1, 3, 10, 11 | |
| A | PATENT ABSTRACTS OF JAPAN <br> vol. 9, no. 163 (P-371)(1886) 09 July 1985, <br> & JP-A-60 040516 (MATSUSHITA DENKI SANGYO K.K.) 02 March 1985, <br> * the whole document * | 1, 2 | |
| | -/-- | | |

The present search report has been drawn up for all claims

| Place of search | Date of completion of the search | Examiner |
|---|---|---|
| THE HAGUE | 25 JANUARY 1990 | FUX J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PATENT ABSTRACTS OF JAPAN<br>vol. 11, no. 126 (P-569)(2573) 21 April 1987,<br>& JP-A-61 269211 (SEIKO EPSON CORP) 28 November 1986,<br>* the whole document * | 1, 2 | |
| A | US-A-3564522 (W. W. STEVENS, JR) | | |
| | | | **TECHNICAL FIELDS SEARCHED (Int. Cl.5 )** |

The present search report has been drawn up for all claims

| Place of search | Date of completion of the search | Examiner |
|---|---|---|
| THE HAGUE | 25 JANUARY 1990 | FUX J. |

EPO FORM 1503 03.82 (P0401)